**Europäisches Patentamt**

**European Patent Office**

**Office européen des brevets**

(19)

(11) Veröffentlichungsnummer: **0 147 481**

**B1**

(12) **EUROPÄISCHE PATENTSCHRIFT**

(45) Veröffentlichungstag der Patentschrift:
**02.09.87**

(21) Anmeldenummer: **83113120.6**

(22) Anmeldetag: **27.12.83**

(51) Int. Cl.⁴: **G 01 J 9/04,** G 01 B 9/02,
H 04 N 7/18

(54) **Weisslicht-Interferometer.**

(43) Veröffentlichungstag der Anmeldung:
**10.07.85 Patentblatt 85/28**

(45) Bekanntmachung des Hinweises auf die Patenterteilung:
**02.09.87 Patentblatt 87/36**

(84) Benannte Vertragsstaaten:
**DE FR GB**

(56) Entgegenhaltungen:
**EP-A-0 084 195**
**US-A-4 201 473**

(73) Patentinhaber: **IBM DEUTSCHLAND GMBH,
Pascalstrasse 100, D-7000 Stuttgart 80 (DE)**
(84) Benannte Vertragsstaaten: **DE**

(73) Patentinhaber: **International Business Machines
Corporation, Old Orchard Road, Armonk, N.Y.
10504 (US)**
(84) Benannte Vertragsstaaten: **FR GB**

(72) Erfinder: **Korth, Hans- Erdmann, Dipl.- Phys.,
Sandbergstrasse 34, D-7000 Stuttgart (DE)**

(74) Vertreter: **Teufel, Fritz, Dipl.- Phys., IBM
Deutschland GmbH. Europäische Patentdienste
Postfach 265, D-8000 München 22 (DE)**

## Beschreibung

Die Erfindung betrifft ein Interferometer nach dem Oberbegriff des Hauptanspruchs.

Optische Interferometeranordnungen werden seit langem zur punktweisen oder zur großflächigen Bestimmung von Oberflächentopographien oder Schichtdicken verwendet, da mit ihnen eine sehr genaue, zerstörungsfreie und schnelle Messung möglich ist. Beispiele für derartige Anordnungen sind die Interferometer nach Michelson oder nach Mach-Zehnder. Zur leichteren Auswertung des entstehenden Musters aus Interferenzstreifen werden die bekannten Interferometer im Normalfall mit monochromatischem Licht betrieben. Die Genauigkeit der Auswertung dieser Interferometerbilder liegt bei Bruchteilen einer halben Wellenlänge (dem Abstand zweier benachbarter Interferometerstreifen) und kann mit elektronischen Mitteln bis in die Größenordnung von $\frac{\lambda}{100}$ gesteigert werden. Ein prinzipieller Nachteil der mit monochromatischem Licht betriebenen Interferometer besteht darin, daß nur Phasenunterschiede der interferierenden Wellen, die einem Gangunterschied von höchstens $\frac{\lambda}{2}$ entsprechen, eindeutig meßbar sind, da größere Phasenunterschiede (d.h. größere Höhenschwankungen oder Schichtdickenänderungen) wieder zum gleichen Interferenzmuster führen. Außerdem erscheinen in monochromatischen Interferenzbildern hügel- und tälerförmige Oberflächenstrukturen gleich.

Zur Überwindung dieser Nachteile wurden im Stand der Technik schon verschiedene Modifikationen monochromatischer Interferometer vorgeschlagen, z. B. Verwendung von schief einfallendem Licht zur Erhöhung des eindeutigen Meßbereichs periodische Bewegungen, um zwischen Hügeln und Tälern unterscheiden zu können, usw.

Eine prinzipiell andere Möglichkeit zur eindeutigen interferometrischen Messung besteht in der Verwendung von mehreren Wellenlängen bzw. von weißem Licht statt der monochromatischen Beleuchtung. Anstelle der sonst bekannten Hell-Dunkel-Streifen entstehen dann farbige Streifenmuster, z. B. die bekannten Newton'schen Ringe. Die Auswertung dieser farbigen Interferenzerscheinungen (nach Farbe und Amplitude) erlaubt zwar grundsätzlich eine eindeutige Messung von Höhenprofilen oder Schichtdicken, ist jedoch im Einzelfall aufwendig und hat daher nur beschränkt Anwendung gefunden.

Ein Beispiel für die Auswertung farbiger Interferenzstreifen für Schichtdickenmessungen gibt S. Tolansky in dem Buch "Multiple-Beam Interference Microscopy of Metals", London/New-York 1970 auf den Seiten 141, ff. Nach diesem Vorschlag werden die farbigen Interferenzstreifen spektral zerlegt und aus dem Abstand der in dem Spektrum erscheinenden dunklen Interferenzstreifen, den sog.

Müller'schen Streifen, die Schichtdicke und die Schichtgradienten (ansteigender oder abfallender Teil einer Oberfläche) ermittelt. Mit diesem Verfahren können aber immer nur linienförmige Ausschnitte der Oberfläche analysiert werden, jedoch nicht oder nur mit großem Zeitaufwand die Oberfläche als Ganzes.

Die vorliegende Erfindung stellt sich daher die Aufgabe, ein Interferometer der eingangs genannten Art anzugeben, das bei einfachem Aufbau eindeutige Meßergebnisse gleichzeitig für alle Punkte eines flächigen Untersuchungsobjekts liefert und mit sehr hoher Auflösung arbeitet.

Diese Aufgabe wird durch die im Hauptanspruch gekennzeichnete Erfindung gelöst; Ausgestaltungen der Erfindung sind in den Unteransprüchen gekennzeichnet.

Bei der hier vorgeschlagenen Anordnung nimmt eine handelsübliche Farbfernsehkamera das farbige Interferenzmuster auf, das in einer herkömmlichen Interferenzanordnung bei Beleuchtung mit weißem Licht erzeugt wird. Die drei elektrischen Ausgangssignale der Farbfernsehkamera, die den drei Farbauszügen Rot, Grün und Gelb entsprechen, stellen für jeden Punkt des Interferenzfeldes drei Abtastwerte der farbigen Interferenzkurve dar, aus denen sich die Phasendifferenz zwischen den zur Interferenz beitragenden Wellenzügen ermitteln läßt. Die Phasendifferenzen, die zu jeder Farbkombination gehören, sind für jeden Interferometertyp verschieden und können rechnerisch bestimmt werden. Die Ergebnisse dieser Berechnung werden dann in Form von elektrisch zugreifbaren Tabellen abgespeichert, die mit Hilfe der Ausgangssignale der Farbfernsehkamera adressiert werden können, um den zugehörigen Wert der Phasendifferenz auszulesen.

Die so für jeden Punkt des Interferenzfeldes ermittelte Phasendifferenz (bzw. die Schichtdicke oder die Höhendifferenz einer Oberfläche) kann anschließend wieder als Farbwert codiert und zur Ansteuerung eines Farbfernsehmonitors verwendet werden, auf den so ein künstlich erzeugtes Schichtdicken- oder Oberflächenprofil des untersuchten Gegenstandes erscheint. Dieses Profil kann außerdem auf elektronischem Wege dem Bild des untersuchten Gegenstands überlagert werden.

Die Verwendung von elektronischen Speichern zur Aufnahme von Tabellen, bei deren Berechnung auf die jeweiligen charakteristischen Eigenheiten der Anordnung oder des Prüflings eingegangen werden kann, erlaubt eine flexible Anpassung an eine Vielzahl von Meßproblemen. Der Schaltungsaufwand bleibt dabei gering, da nur handelsübliche Komponenten verwendet werden, beispielsweise Analogschaltungen, die auch bei der üblichen Fernsehübertragung eingesetzt werden. Die Auswertung des farbigen Interferenzbildes erfolgt in Echtzeit.

Die interferometrische Messung mit der vorgeschlagenen Anordnung liefert die absoluten Werte von Höhendifferenzen oder Schichtdicken und erlaubt außerdem die klare Unterscheidung zwischen ansteigenden und abfallenden Gebieten bzw. dicker oder dunner werdenden Schichten. Die Verwendung weiterer elektronischer Speicher mit wahlweise zuschaltbaren Korrekturfaktoren, z. B. für Schichten mit unbekanntem Brechungsindex, erweitert die Anwendungsmöglichkeiten der Anordnung.

Ausführungsbeispiele der vorgeschlagenen Interferometeranordnung werden nun anhand von Zeichnungen näher erläutert. Es zeigen:

Fig. 1 den prinzipiellen Aufbau einer Weißlicht-Interferometeranordnung nach der vorliegenden Erfindung,

Fig. 2 ein schematisches Beispiel einer räumlichen Kurve der Phasendifferenz, wie sie einer Anordnung nach Fig. 1 zugrundeliegen,

Fign. 3A, 3B und 3C Projektionen der Kurve nach Fig. 2 auf drei Koordinatenebenen.

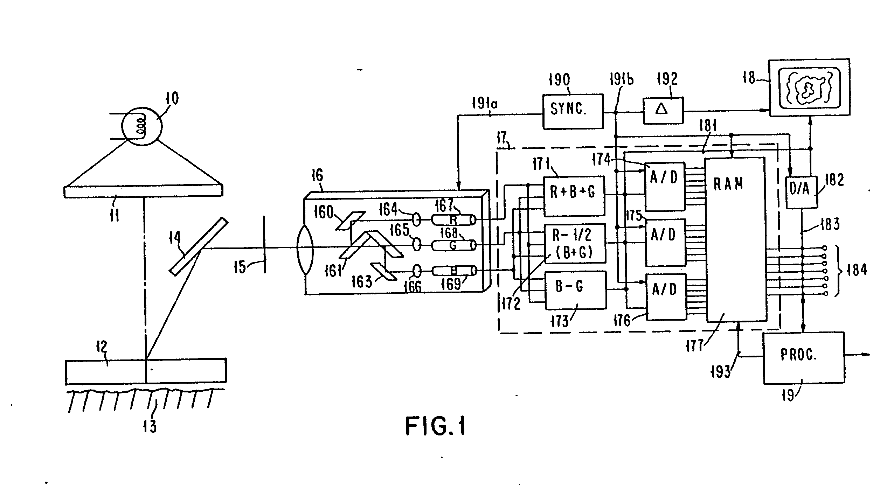

Fig. 1 zeigt in schematischer Weise den grundsätzlichen Aufbau eines Weißlicht-Interferometers der hier vorgeschlagenen Art am Beispiel einer der einfachsten Interferenzanordnungen, dem sog. Prüfglasverfahren. Eine auf Ebenheit zu prüfende Oberfläche 13 wird dazu mit einem ebenen Glasplättchen 12 abgedeckt und großflächig mit weißem Licht beleuchtet, das beispielsweise von einer Giühlampe 10 und einem nachgeschalteten optischen Diffusor (Streuplatte) 11 erzeugt wird. Durch Interferenz zwischen den Lichtstrahlen, die an der Oberfläche 13 einerseits und der Unterseite der planparallelen Glasplatte 12 reflektiert werden, entstehen in bekannter Weise die farbigen Interferenz-Streifenmuster, die von einer handelsüblichen Farbfernsehkamera 16 über einen Umlenkspiegel 14 aufgenommen werden. Wahlweise befindet sich zwischen Umlenkspiegel 14 und der Kamera 16 ein optisches Filter 15, beispielsweise ein Interferenzfilter; dessen Funktion wird später genauer erläutert.

In der Farbfernsehkamera 16 sind in bekannter Weise drei Aufnahmeröhren 167 bis 169 vorgesehen, denen jeweils ein Farbauszug (für die Primärfarben Rot, R; Grün, G; Blau, B) des Interferenzfeldes zugeführt wird; dazu werden die üblichen Farbfilter 164 bis 166 und Umlenkspiegel 160 bis 163 verwendet. Die R,G,B-Signale stellen also eine Dreipunktabtastung der spektralen Intensitätskurve dar, die dem gerade abgetasteten Bildpunkt des Interferenzfeldes entspricht. Aus diesen Werten kann somit, wie später noch im einzelnen erläutert wird, die lokale Phasendifferenz zwischen den interferierenden Lichtstrahlen ermittelt werden.

Die Bestimmung der lokalen Phasendifferenz für jeden Bildpunkt des Interferenzfeldes kann entweder durch die Verarbeitung der R,G,B-Signale selbst erfolgen oder aber durch die Verarbeitung der bei Fernsehübertragungen verwendeten Signale Luminanz Y (der Bildinhalt, entsprechend der Schwarz-Weiß-Struktur des Bildes) und Chrominanz (die Farbart, in der die Komponenten Farbton und Farbsättigung enthalten sind). Beide Signale stellen Linearkombinationen der R,B,G-Signale dar und werden zusammen mit einem Austast- und einem Synchronisiersignal zum sog. FBAS-Signal vereinigt. Mit diesem kann dann z. B. ein Farbmonitor angesteuert werden.

In dem Ausführungsbeispiel von Fig. 1 sind die Linearkombinationen der R,G,B-Signale verwendet, die im wesentlichen dem Luminanz- und dem Chrominanzsignal entsprechen und in den als Blockdiagramm dargestellten elektronischen Schaltungen 171 bis 173 erzeugt werden. Schaltung 171 erzeugt analog dem Luminanzsignal die Summe der drei Farbauszüge R + B + G, während die Schaltungen 172 und 173 die beiden Kombinationen R-1/2(B+G) und (B-G) erzeugen. Die Schaltungen 171 bis 173 können auch die herkömmlichen fernsehtechnischen Schaltungen darstellen, wie sie beispielsweise schon in der handelsüblichen Farbfernsehkamera 16 enthalten sind. Dann wird zur Darstellung des Luminanzsignals die Summe

$$Y = 0,3 R + 0,59 G + 0,11 B$$

erzeugt und außerdem die beiden Farbdifferenzsignale R-Y und B-Y. Mit dem kombinierten Ausgangssignal der dann entsprechend modifizierten Schaltungen 171 bis 173 kann dann beispielsweise das aufgenommene Interferenzfeld über eine Sammelleitung 181 direkt auf einen Farbfernsehmonitor 18 gegeben werden.

Nach der Erfindung werden die Ausgangssignale der Schaltungen 171 bis 173 jeweils einem Analog/Digitalwandler 174 bis 176 zugeführt, der entsprechend dem momentanen Analogwert der Komponenten des Fernsehsignals einen Digitalwert erzeugt. Die Binärzahlen am Ausgang der Wandler 174 bis 176 bestimmen zusammengenommen die lokale Phasendifferenz der interferierenden Wellen im gerade untersuchten Bildpunkt. Für jede mögliche Kombination der R,G,B-Signale (oder der davon abgeleiteten Fernsehsignale) enthält ein Speicher 177 die zugehörigen Phasendifferenzen bzw. Schichtdicken; die jeweilige Speicherstelle wird durch die als Adressiersignale verwendeten Binärzahlen der Analog/Digitalwandler 174 bis 176 ausgelesen.

Die Ausgangsleitungen 184 des elektronischen Speichers RAM 177 mit wahlfreiem Zugriff (der auch ein Nur-Lesespeicher ROM sein kann) zeigen also in binärer Darstellung die lokale Phasendifferenz bzw. die lokale Schichtdicke am jeweils abgetasteten Punkt des Fernsehbildes an. Wird ein Lese-/Schreibspeicher verwendet, kann ein Digitalprozessor über Leitung 193 angeschlossen werden, um den Speicherinhalt zu ändern und so die Kamera an geänderte Umgebungen anzupassen, z. B. einen anderen Interferometer-Strahlengang.

Der Binärwert an den Ausgangsleitungen 184 kann zur Weiterverarbeitung über eine Sammelleitung 183 zu einem Digitalrechner 19 (oder einem Bildauswertegerät) gegeben werden. Ist eine visuelle Darstellung der lokalen Phasendifferenzen der interferierenden Lichtstrahlen gewünscht, so wird der Digitalwert auf den Leitungen 184 mit einem (oder mehreren) Digital/Analogwandler 182 wieder in ein Signal zur Ansteuerung eines Farbfernsehmonitors 18 umgewandelt (sog. falsche Farben), so daß auf dem Monitor 18 die Punkte des Interferenzfeldes mit gleichen Phasendifferenzen als gleichfarbige Punkte erscheinen, die sich beispielsweise als Hohenlinien darstellen. Dieses Höhenlinienmuster kann auch gleichzeitig mit dem Abbild des Interferenzfeldes (das über Leitung 181 zugeführt wird) dargestellt werden.

Diese künstlich erzeugten Höhenschichtdiagramme (oder Schichtdickendiagramme) ähneln den Interferenzbildern, die bei monochromatisch beleuchteten Interferenzanordnungen entstehen und werden daher als "Pseudo-Interferenzstreifen" bezeichnet. Der Informationsgehalt dieser Pseudo-Interferenzstreifen kann jedoch beträchtlich höher sein als bei den herkömmlichen Interferenzaufnahmen, da in den Ausgangssignalen 184 alle Information über die lokalen Parameter des Interferenzfeldes enthalten sind (z. B. absoluter Wert der Schichtdicke, Vorzeichen der Schichtdickenänderung, etc.). Beispielsweise können ansteigende oder abfallende Teile der untersuchten Oberfläche im Pseudo-Interferenzfeld dadurch angezeigt werden, daß anstelle einer einfachen Höhenlinie eine Doppellinie erzeugt wird, wobei die eine Linie (beispielsweise mit unterschiedlicher Farbe) auf der ansteigenden Seite angeordnet wird. Sehr einfache Pseudo-Interferenzfelder, die den optischen Interferenzfeldern entsprechen, entstehen, wenn nur die Stellen der untersuchten Oberfläche angezeigt werden, an denen gerade ein lokaler Phasenunterschied von $\frac{\lambda}{2}$ besteht. In diesem Fall ist die erforderliche Speicherkapazität sehr klein, da für jede R,G,B-Kombination nur ein Bit gespeichert werden muß.

Die Farbfernsehkamera, die A/D-Wandler, der Speicher, der D/A-Wandler und der Monitor arbeiten synchron und werden beispielsweise durch eine Synchronisiersteuerung 190 über Synchronisierleitung 191 gesteuert. Zum Ausgleich des geringen Zeitverlustes bei der Verarbeitung der R,G,B-Signale kann das Synchronisiersignal für den Monitor 18 entsprechend verzögert werden.

Die Anzahl der bei der Auswertung auflösbaren Interferenzordnungen hängt von der Bandbreite des einzelnen Farbkanals in der Kamera 16 ab. Zur Einengung des Spektralbereichs, das von den Aufnahmeröhren R, G und B aufgenommen wird, können die Farbauszugsfilter (160 bis 163) in der Kamera selbst ausgewechselt werden; eine andere Möglichkeit besteht darin, vor der Kamera ein Interferenzfilter 15 anzuordnen, das sehr enge Durchlaßbereiche im roten, grünen und blauen Bereich aufweist. Derartige "Mehrfach-Interferenzfilter" können beispielsweise als Fabry-Perot-Anordnung hergestellt werden.

Die hier vorgeschlagene Auswertung eines Weißlicht-Interferenzfeldes hängt in geringem Maße von der Farbtemperatur des untersuchten Gegenstandes 13 ab. Um diesen Einfluß zu kompensieren, kann die Farbtemperatur separat gemessen und als Korrekturfaktor berücksichtigt werden (entweder durch entsprechende Beeinflussung der Eingangssignale für die Analog/Digitalwandler 174 bis 176 oder durch Korrektur der Ausgangswerte 184). Eine weitere Korrektur kann bei Mehrfach-Interferenzen erforderlich sein, bei denen die Phasendifferenz der interferierenden Lichtbündel nicht nur durch die Schichtdicke (z. B. den Luftspalt zwischen Glasplatte 12 und Oberfläche 13) bestimmt wird, sondern auch durch die Brechungsindices der reflektierenden Flächen. Korrekturen sind auch erforderlich bei Reflexionen an metallischen Flächen, da dort ein Phasensprung auftritt. Auch in diesen Fällen kann eine Korrektur des ausgelesenen Werts 184 erfolgen, beispielsweise durch einen angeschlossenen Prozessor 19.

Die jeweils erforderlichen Korrekturwerte können auch in einen separaten Korrekturspeicher eingetragen werden, der dann ebenfalls die Ausgangssignale der A/D-Umsetzer 174 bis 176 empfängt; die daraus entnommenen Korrekturen werden dann mit entsprechenden Addierschaltungen den Ausgangssignalen 184 hinzugefügt.

Die zum Aufbau der elektronischen Auswerteschaltung verwendeten Komponenten, also die Analog/Digitalumsetzer 174 bis 176, der Speicher 179, der Digital/Analogumsetzer 182 und der Rechner 19 sind handelsübliche Bausteine. Die Verarbeitungsgeschwindigkeit der verwendeten Umsetzer und die Zugriffsgeschwindigkeit zum Speicher müssen allerdings ausreichend hoch gewählt werden, wenn eine Echtzeit-Auswertung des abgetasteten Interferenzbildes erforderlich ist; gegebenenfalls kann auch eine Verzögerung der Synchronisier- und Ablenksignale des FBAS-Signals erfolgen, um den Zeitverlust bei der Umsetzung der Luminanz- und Chrominanzanteile mit dem Speicher auszugleichen. Die erforderliche Kapazität des Speichers ist relativ gering und beträgt beispielsweise 32 K Speicherstellen (Bytes oder Worte), wenn die drei zur Adressierung dienenden Analogsignale jeweils in eine aus fünf Bits bestehende Binärzahl umgesetzt werden. Derartige Speicherkapazitäten lassen sich ohne weiteres mit Zugriffszeiten von einigen 10 Nanosekunden herstellen.

Das Verfahren zur Berechnung von Schichtdicken aus den drei gemessenen Farbsignalen R, G, B wird nun anhand eines einfachen Beispiels erläutert, bei dem eine dünne transparente Schicht senkrecht mit weißem Licht beleuchtet wird. Die dazu verwendeten Überlegungen zwischen den Primärfarben R,G,B und der Farbe eines Objekts sind beispielsweise in dem Artikel von H. Kubota in Progress in Optics, Bd. 1, 1961, S. 213 ff. im einzelnen dargestellt.

Für das wellenlängenabhängige Reflexionsvermögen r einer dünnen Schicht gilt

$$r = \frac{r_1^2 + r_2^2 + 2r_1r_2\cos\delta}{1 + r_1^2r_2^2 + 2r_1r_2\cos\delta} \quad (1)$$

wobei die Reflexionskoeffizienten $r_1$ und $r_2$ für die obere und die untere Grenzschicht dieser Schicht definiert sind als:

$$r_1 = \frac{n_1-n}{n_1+n}, \; r_2 = \frac{n-n_2}{n+n_2} \quad (2)$$

Die Variable $\delta$ ist definiert als $4\pi(nd)/\lambda$; n ist der Brechungsindex der Schicht, $n_1$ und $n_2$ sind die Brechungsindices des über bzw. unter der Schicht liegenden Mediums. Der Zähler von Gleichung (1) stellt die Interferenz zweier ebener Wellenzüge mit einem gegenseitigen Phasenunterschied von $\delta$ dar, der Nenner ist auf Mehrfachinterferenzen zurückzuführen und verzerrt den kosinusförmigen Verlauf des Reflexionsvermögens als Funktion der Wellenlänge bzw. der Schichtdicke, der sich bei alleiniger Betrachtung des Zählers ergibt.

Die drei Ausgangssignale der Farbfernsehkamera ergeben sich damit zu

$$B = I_o(\lambda_B)r_B$$
$$R = I_o(\lambda_R)r_R \quad (3)$$
$$G = I_o(\lambda_G)r_G,$$

wenn $I_o(\lambda_i)$ die Intensität des einfallenden Lichts bei der jeweiligen Wellenlänge ist und $r_i$ das Reflexionsvermögen der Schicht bei den betrachteten Wellenlängen R, G, B. Die Berechnung dieser R,G,B-Werte mit der Schichtdicke d als Parameter ergibt einen Kurvenzug in einem rechtwinkligen Koordinatensystem, auf dessen Achsen die Intensitäten der drei Grundfarben aufgetragen sind. Umgekehrt kann zu jedem gemessenen Farbtripel R, G, B in diesem Koordinatensystem der zugehörige Punkt der oben errechneten Parameterkurve ermittelt werden, der die Schichtdicke bestimmt. Da die gemessenen Farbwerte R, G, B auch zum Adressieren des Speichers 177 verwendet werden, läßt sich der gesamte Adreßraum dieses Speichers als Würfel mit den Kanten R, G, B auffassen; jedes Zahlentripel R, G, B bestimmt dann einen Elementarwürfel im Innern dieses Adreßraums, in dem die zugehörige Schichtdicke gespeichert ist.

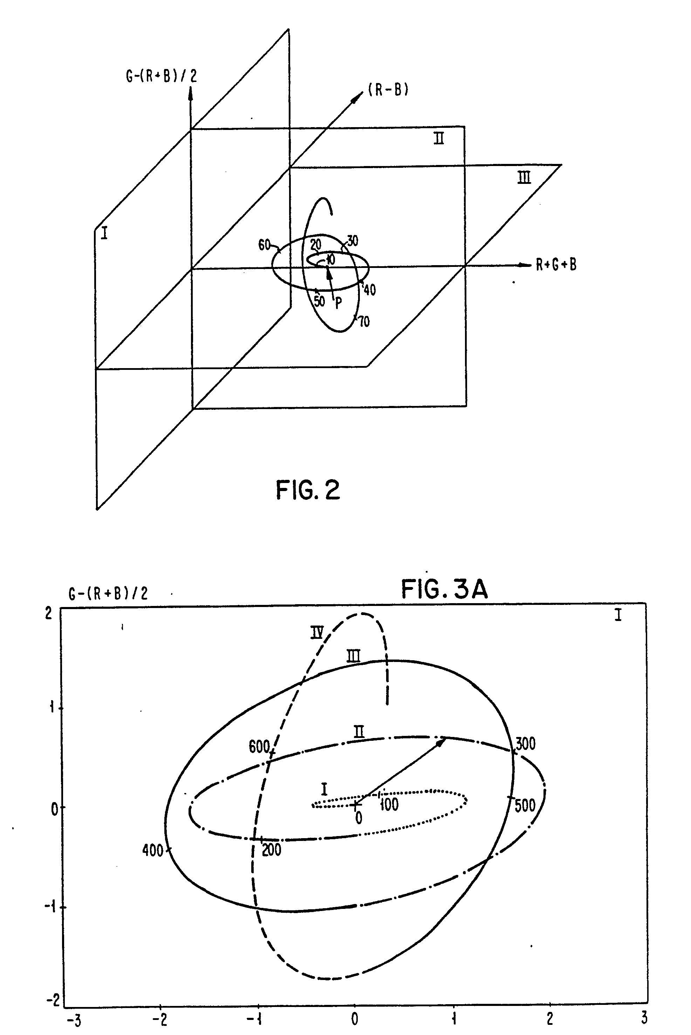

Statt der drei Primärfarben selbst, können für die obigen Überlegungen auch deren Linearkombinationen verwendet werden. Fig. 2 zeigt dazu in perspektivischer Ansicht ein rechtwinkliges Koordinatensystem, dessen Achsen die früher erläuterten Linearkombinationen der Grundfarben R, G, B sind. Die oben beschriebene Ortskurve der Schichtdicken, die zu bestimmten R,G,B-Kombinationen gehören, stellt sich in diesem Achsenkreuz als eine Kurve dar, die mit wachsenden Schichtdicken von einem Punkt P ausgeht. Der punkt P entspricht dabei der Farbart der zur Messung verwendeten Lichtquelle. Mit wachsendem Abstand der Kurvenpunkte vom Punkt P wächst die Ordnungszahl der zugehörigen Interferenz; (nicht maßstabsgerechte) Beispiele für Schichtdicken in nm sind längs der Kurve eingezeichnet.

Ein gerechnetes Beispiel für eine derartige Kurve ist in den Fign. 3A bis 3C dargestellt, die jeweils Projektionen der räumlichen Kurve nach Fig. 2 auf Ebenen I, II, III entsprechen, die die Koordinatenachsen von Fig. 2 enthalten. Abschnitte der Kurven, die unterschiedlichen Interferenzordnungen entsprechen, sind dabei durch unterschiedliche Darstellung (gestrichelt, punktiert, etc.) hervorgehoben.

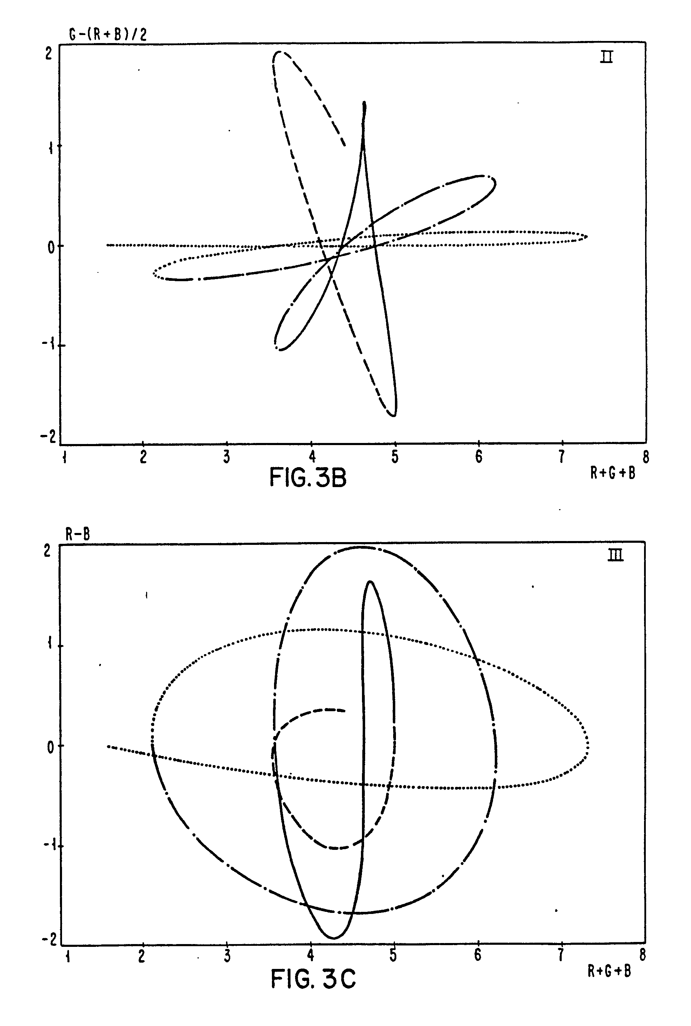

Die für jede konkrete Anwendung erforderliche Kurve nach Fig. 2 oder Fig. 3 muß unter Beachtung der dann vorliegenden Interferenzbedingungen rechnerisch ermittelt werden. Beispiele für die zu beachtenden Parameter sind:

Einfach- oder Mehrfachinterferenz,
senkrechte oder schiefe Inzidenz,
die individuellen Brechungsindizes,
Auftreten metallischer Reflexionsschichten,
etc.

Diese Berechnung kann beispielsweise im Prozessor 19 erfolgen, der die Ergebnisse über eine (z. B. wahlweise anschaltbare) Leitung 193 an den Speicher 177 gibt.

Die Projektionen der räumlichen Kurve von Fig. 2 auf die dargestellten Koordinatenebenen weisen Überschneidungen auf, so daß bei isolierter Betrachtung einer Projektion keine eindeutige Zuordnung eines Kurvenpunktes zu einer bestimmten Schichtdicke möglich sein kann. In diesen Fällen müssen die anderen Projektionen zur eindeutigen Festlegung einer Schichtdicke herangezogen werden, beispielsweise durch Betrachtung der Interferenzordnung. Die in dem Speicher 179 enthaltenen Daten werden dazu so angeordnet, daß eine Tabelle mit der Schichtdicke in Abhängigkeit vom gemessenen Farbton adressiert wird. Die Farbsättigung und die Luminanz dienen zur Adressierung der Interferenzordnungszahl.

Nach der bisherigen Darstellung ist es nur erforderlich, diejenigen Kombinationen von R,G,B-Signalen in dem Koordinatensystem nach Fig. 2 (und den entsprechenden Stellen im Adreßraum des Speichers) mit Werten zu belegen, denen rechnerisch eine Schichtdicke zugeordnet werden kann. In der Praxis werden jedoch die gemessenen R,G,B-Kombinationen aufgrund der unvermeidlichen Meßfehler aber nicht nur zu diesen ausgezeichneten Punkten führen, sondern auch andere Stellen des Adreßraum-Würfels adressieren, denen keine Schichtdicke zugeordnet ist. Um auch bei solchen Messungen eine Schichtdicke ermitteln zu können, ist es erforderlich, auch die Gebiete des Adreßraumes mit Werten zu belegen, die in der Umgebung der errechneten räumlichen Kurve von Fig. 2 liegen. Die Zuordnung eines Meßtripels R, G, B zu einer Schichtdicke kann dabei so erfolgen, daß die Schichtdicke ausgewählt wird, die dem kleinsten räumlichen Abstand des Meßpunktes von der räumlichen Parameterkurve entspricht. Die zugehörige Schichtdicke wird dann auch in diese Speicherstelle des Adreßraumes eingetragen.

Da die Anzahl der auflösbaren Interferenzordnungen ansteigt, wenn die Bandbreite der einzelnen Farbkanäle R, G, B kleiner wird, ist es für eine eindeutige Messung vorteilhaft, das früher erwähnte Interferenzfilter 15 mit sehr schmalen Durchlaßbereichen zu verwenden.

**Patentansprüche**

1. Optisches Interferometer, bei dem mindestens zwei weiße Lichtbündel zur Interferenz gebracht werden,
dadurch gekennzeichnet,
daß das Interferenzfeld durch eine Farbfernsehkamera (16) beobachtet wird, deren Ausgangssignale (R, G, B) einer elektronischen Auswerteeinheit (17) zugeführt werden und daß die Auswerteeinheit einen Digitalspeicher (179) enthält, der von den digitalisierten Ausgangssignalen der Kamera adressiert wird, um den in der betreffenden Speicherstelle enthaltenen Wert der Phasendifferenz der interferierenden Wellen auszulesen.

2. Interferometer nach Anspruch 1, dadurch gekennzeichnet,
daß die Ausgangssignale (R, G, B) der Farbfernsehkamera direkt jeweils zugeordneten Analog/Digitalwandlern (174 bis 176) zugeführt werden.

3. Interferometer nach Anspruch 2, dadurch gekennzeichnet,
daß den Analog/Digitalwandlern (174 bis 176) jeweils drei der folgenden Linearkombinationen der Ausgangssignale der Kamera zugeführt werden:
R + B + G
R - 1/2 (B + G)
B - G.

4. Interferometer nach einem der Ansprüche 1 bis 3, dadurch gekennzeichnet,
daß das Ausgangssignal des Speichers (179) einem Digital/Analogwandler (182) zugeführt wird, dessen Ausgang mit einem Fernsehmonitor (18) verbunden ist.

5. Interferometer nach einem der Ansprüche 1 bis 4, dadurch gekennzeichnet,
daß der Ausgang des Speichers (179) mit einem digitalen Prozessor (19) verbunden ist.

6. Interferometer nach einem der Ansprüche 1 bis 5, dadurch gekennzeichnet,
daß der Digitalspeicher ein Nurlese-Speicher ist.

7. Interferometer nach einem der Ansprüche 1 bis 5, dadurch gekennzeichnet,
daß der Digitalspeicher (179) ein Lese-/Schreibspeicher ist, der zum Einlesen mit einem digitalen Prozessor (19) verbunden werden kann.

8. Interferometer nach einem der Ansprüche 1 bis 7, dadurch gekennzeichnet,
daß schmalbandige Spektralbereiche für die Erzeugung der Ausgangssignale (R, G, B) verwendet werden.

9. Interferometer nach Anspruch 8, dadurch gekennzeichnet,
daß der Kameralinse ein Interferenzfilter vorgeschaltet ist, das im Bereich der Primärfarben schmale Transmissionsbereiche aufweist.

**Claims**

1. Optical interferometer, wherein at least two white light beams are made to interfere,
characterized in that the interference field is observed through a colour TV camera (16), the output signals (R, G, B) of which are fed to an electronic evaluator (17), and that the evaluator comprises a digital storage (179) which is addressed by the digitized output signals of the camera for reading the phase difference value of the interfering waves from the respective storage locations.

2. Interferometer according to claim 1,
characterized in that the output signals (R, G, B) of the colour TV camera are directly fed to associated analog-to-digital converters (174 to 176).

3. Interferometer according to claim 2,
characterized in that three of the following linear combinations of the output sienals of the camera are in each case fed to the analog-to-digital converters:
R + B + G
R - 1/2 (B + G)
B - G.

4. Interferometer according to any one of the claims 1 to 3,
characterized in that the output signal of the storage (179) is fed to a digital-to-analog converter (182), the output of which is connected to a TV monitor (18).

5. Interferometer according to any one of the claims 1 to 4,
characterized in that the output of the storage (179) is connected to a digital processor (19).

6. Interferometer according to any one of the claims 1 to 5,
characterized in that the digital storage is a read-only storage.

7. Interferometer according to any one of the claims 1 to 5,
characterized in that the digital storage (179) is a read/write storage which, for reading, may be connected to a digital processor (19).

8. Interferometer according to any one of the claims 1 to 7,
characterized in that narrow band spectral ranges are used to generate the output signals (R, G, B).

9. Interferometer according to claim 8, characterized in that the camera lens is preceded by an interference filter having narrow pass ranges for the primary colours.


**Revendications**

1. Interféromètre optique, dans lequel au moins deux faisceaux de lumière blanche sont amenés à entrer en interférence, caractérisé par le fait que le champ d'interférence est observé par une caméra de télévision en couleurs (16), dont les signaux de sortie (R, G, B) sont envoyés à une unité électronique d'évaluation (17) et que l'unité d'évaluation contient une mémoire numérique (179), qui est adressée par les signaux de sortie numérisés de la caméra dans le but de lire la valeur, contenue dans l'emplacement considéré de la mémoire, de la différence de phase des ondes interférentes.

2. Interféromètre selon la revendication 1, caractérisé en ce que les signaux de sortie (R, G, B) de la caméra de télévision sont envoyés directement à des convertisseurs analogique/numérique associés respectits (174 à 176).

3. Interféromètre selon la revendication 2, caractérisé en ce que respectivement trois des combinaisons linéaires suivantes des signaux de sortie de la caméra sont envoyés aux convertisseurs analogique/numérique (174 à 176):
R + B + G
R - 1/2 (B + G)
B - G.

4. Interféromètre selon l'une des revendications 1 à 3, caractérisé en ce que le signal de sortie de la mémoire (179) est envoyé à un convertisseur numérique/analogique (182), dont la sortie est reliée à un moniteur de télévision (18).

5. Interféromètre selon l'une des revendications 1 à 4, caractérisé en ce que la sortie de la mémoire (179) est reliée à un processeur numérique (19).

6. Interféromètre selon l'une des revendications 1 à 5, caractérisé en ce que la mémoire numérique est une mémoire morte.

7. Interféromètre selon l'une des revendications 1 à 5, caractérisé en ce que la mémoire numérique (179) est une mémoire de lecture/enregistrement, qui peut être reliée, pour la lecture, à un processeur numérique (19).

8. Interféromètre suivant l'une des revendications 1 à 7, caractérisé en ce qu'on utilise des plages spectrales à bande étroite pour la protection des signaux de sortie (R, G, B).

9. Interféromètre selon la revendication 8, caractérisé en ce qu'en avant de la lentille de la caméra se trouve disposé un filtre interférentiel, qui possède des plages étroites de transmission dans la gamme des couleurs primaires.

FIG.1

0 147 481

G-(R+B)/2

(R-B)

II

III

I

R+G+B

60 20 30

10

50 P 40

70

FIG. 2

FIG. 3A

G-(R+B)/2

IV

III

II

I

600 300

100

0

400 200 500

3

FIG. 3B

FIG. 3C